# EUROPEAN PATENT APPLICATION

(11) **EP 1 176 568 A2**
(43) Date of publication of application: **30.01.2002**
(21) Application number: 01112594.5
(22) Date of filing: 23.05.2001
(51) Int. Cl.: G08B 25/08

(54) **Method and system for supervising and supporting customer services offered to a contracted dwelling by a service provider using a communication network**

(30) Priority: 25.07.2000 JP 2000224497
(71) Applicant: Matsushita Electric Works, Ltd., Kadoma-shi, Osaka (JP)
(72) Inventor: Mise, Toshiro, c/o Matsushita Electric Works, Ltd., Kadoma-shi, Osaka (JP)
(74) Representative: Sajda, Wolf E., Dipl.-Phys.

(57) **Abstract**

A method and system for supervising and supporting various customer services offered to a contracted dwelling house over a communication network by a service provider, by a supervisory server equipped on the communication network, using a communication network, such as the Internet. According to which, the supervisory server judges access request from the communication server of the service provider to allow the communication server to access to the home information communication terminal unit when identifying its authentication, but to reject access to the home information communication terminal unit when not identifying its authentication, in which the contracted dwelling house receives various desired customer services through the home information communication terminal unit by executing service application program which is provided by the service provider and is installed into the home information communication terminal unit connected to an indoor network laid in the contracted dwelling house, and after allowing for access of the communication server of the service provider to the home information communication terminal unit, watching communication associated with the communication server unit and the home information communication terminal unit, to judge whether or not the customer service is normally offered to the contracted dwelling house.

## Description

### BACKGROUND OF THE INVENTION

### 1. Field of the Invention

The present invention relates to a method and system for supervising and supporting customer service offered to a contacted dwelling house, in which an indoor communication network connected to living appliance, facility or equipment including electric appliances are connected is laid, by various service providers through an outdoor communication network such as the Internet by a supervisory server equipped on a communication network.

### 2. Description of the Related Art

Service systems for offering various customized service to specific customers from service providers by connecting specific facilities and equipment individually installed on their dwelling houses to monitoring centers of service providers through public telephone lines or exclusive lines have been well known as the special service system such as security system, at-home patient nursing and care system, tele-metering system.

For example, a security system is disclosed in Japanese patent application JP-A-58-1992 (laid open on February 5, 1983). This system is so constructed that if the alarming apparatus is set to alert mode at night or when the dweller goes out, when the security sensor installed in the house is activated during the apparatus remains in the alerting mode, the system automatically reports to the monitoring center and automatically turns on outdoor lights, or further sends guards to the house.

In at-home patient nursing monitoring system, the system is so constructed that if an old person living alone pushes an emergency call button in the house, the service company is alarmed automatically so that the company can send a patient nursing person to the house immediately. Further in the tele-metering, the system is utilized by electric power, or gas service companies etc. to read out the amount of electricity or gas consumed at each home and automatically calculates the amount to be billed.

In such service systems as above-mentioned, the monitoring centers of service companies are individually connected to the facilities and equipment at the respective homes in order for contracted customers to receive various customized service, however, there are some problems that the service companies have to prepare and equip exclusive devices for corresponding customer service in respective contracted customer's house and further have to individually connect them to their monitoring centers, therefore which raises costs depending on the equipment to prepare.

### SUMMARY OF THE INVENTION

In view of the prior method and system which utilize communication systems as described above, the present invention is proposed.

Accordingly it is an object of the present invention to provide a method and system for constantly supervising customer service offered to a contracted specific user from various service providers through a communication network by a supervisory server equipped on a communication network, in order for the contracted specific user to surely and safely receive customized service from various service providers over a communication network, under a more pleasant and multifarious communication network environment is built.

To achieve the above object, following method is proposed as the present invention, wherein first a supervisory server is equipped on the communication network and executes following steps of; receiving access request from a communication server of the service provider for a home information communication terminal unit equipped in the contracted dwelling house, judging the access request from the communication server of the service provider to allow the communication server to access to the home information communication terminal unit when identifying its authentication, but to reject of access to the home information communication terminal unit when not identifying its authentication, the contracted dwelling house being offered various desired customer service through the home information communication terminal unit by executing service application program which is provided in advance by the service provider and is installed at the home information communication terminal unit connected to an indoor network laid in the contracted dwelling house, and after allowing for access of the communication server of the service provider to the home information communication terminal unit, watching communication over the communication network associated with the communication server unit and the home information communication terminal unit, to judge whether or not the customer service is normally offered to the contracted dwelling house.

Also, in order to achieve the above object, following system is simultaneously proposed as the present invention, wherein the system comprises a home information communication terminal unit connected to an indoor communication network laid in the each contracted dwelling house, for receiving desired service from the service provider by executing a service application program prepared in advance, a service communication server equipped on the service provider side, for providing various customer services to the contracted dwelling house over the communication network, and a supervisory server for judging allowance for access of the service communication server to the home information communication terminal unit when receiving access request from the service communication server, to allow the communication server to access to the home information communication terminal unit when identifying its authentication but to reject it when not identifying its authentication, the supervisory server watching communication associated with at least one of the communication server of service provider and the home information communication terminal unit of the contracted dwelling house over the communication network thereby judging whether or not the customer service is normally offered to the contracted dwelling house of which home information communication terminal unit is accessed by the communication server of the service provider.

According to such present invention, constant and safety customer service from various service providers is ensured to the contracted customer through the home information communication terminal by a supervisory server equipped on a communication network under such a comfortable environment of network system using the Internet, thus it would be not occur such trouble that various services from service providers is suddenly interrupted or living appliances, facilities or equipment which break down are left long out of order without the customer's knowing those or that contracted customer asks for repair company each time the living appliances, facilities or equipment beak down.

In the present invention, contracted customer is offered customized service from various service providers through his home information communication terminal unit equipped in the contracted dwelling houses, and such customer service may be usually executed by corresponding application programs stored in advance in the home information communication terminal unit, living appliances, facilities or equipment equipped in the contracted dwelling houses.

However, such application program for customizing service may be later downloaded from the corresponding communication server of the service providers or specific service servers equipped on a communication network, otherwise, may be downloaded from the supervisory server who is the other party of supervisory contract itself on behalf of various service providers. The latter is especially convenient in the event that service providers don't equip application program or exclusive devices for customized service, by which they can also join as service provides as well as supervisory companies of supervisory servers can expand their service areas in communication network business.

Further aspects and advantages of the invention will be more apparent from the following description.

It should be also understood that the present invention is not limited to the embodiments disclosed in the specification and it goes without saying that variations may be made without departing from the spirit and scope of the present invention.

### BRIEF DESCRIPTION OF THE DRAWINGS

FIG. 1 is a schematic diagram of a home network system to which the present invention is applied.
FIG.2 is a flow chart showing the flow of signals sent and received between a service communication server , a supervisory server and a home information communication terminal unit .
FIG.3 is a flow chart showing an example of monitoring procedure in the home information communication terminal unit .
FIG.4 is a flow chart showing the basic operation of the home information communication terminal unit in the emergency mode.
FIG.5 is a flow chart showing an operation of the supervisory server.

### DETAILED DESCRIPTION OF THE PREFERRED EMBODIMENTS

Now preferred embodiments of the present invention are described referring to the attached drawings.

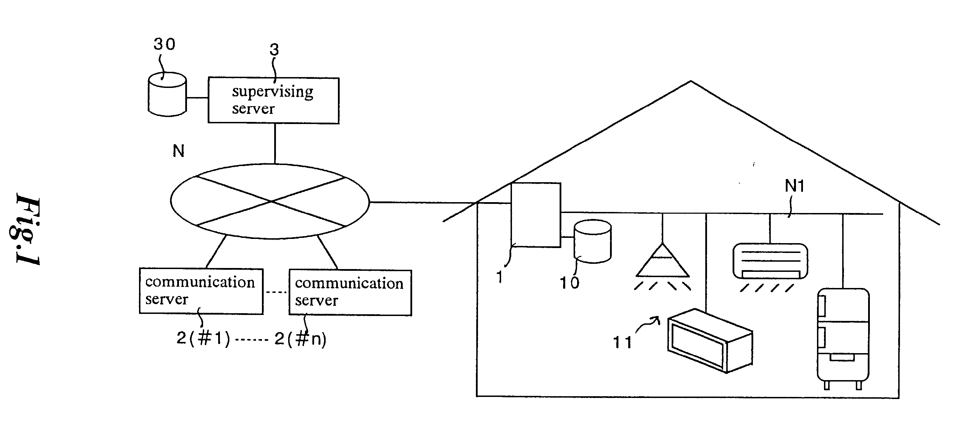

Fig. 1 is schematic diagram showing configuration of a home network system to which the present invention is applied.

A home information communication terminal unit 1 is equipped in a dwelling house and an indoor network N1 is constructed by connecting living facilities 11, hereinafter referred as living facilities, such as lighting equipment, air-conditioning equipment, television, a refrigerator, a washing machine, and so on.

A dwelling house includes living spaces such as a factory and an office other than a home in which persons live and act. Such living facilities 11 also includes terminals such as household electrical appliances, communication equipment, business equipment, plant facilities, security equipment such as a security sensor, a fire detection sensor, a human detection sensor, and so on, a call switch (emergency call button), an electric key, a meter (a metering equipment) for electricity, gas, and water. Each living facility 11 is incorporated with a micro device which has been developed by using such micro- internet embedded technology so that it can be easily connected into the Internet only by inserting a plug in a socket.

The home information communication terminal unit 1 executes necessary control as mentioned later by sending and receiving control signals using protocol used on the Internet between the living facility 11. Electric power source is supplied to each living facility 11 through an indoor outlet, for example, if a power supply control method developed by means of power-line carrier technique is applied, electric power source can be supplied together with control signals via the same signals line. Such living equipment 11 can be operated by remote control or its operating conditions can be monitored by an external communication terminal unit such as a cellular phone connected via the Internet.

The home information communication terminal unit 1 has a function of a distribution board supplying electric power to a dwelling house , thus supplies electric power to each living facility 11. However, an indoor communication network, a collective housing network, a neighboring network without accompanying electric supply can be applied.

It isn't limited that the home information communication terminal unit 1 and the living facilities 11 are connected with wire. They may be connected wirelessly so that they may be operated by remote control by means of a cellular phone.

The home information communication terminal unit 1 is connected to a communication network N being represented by the Internet and is connectable with communication servers 2 (#1 - #n) and a supervisory server 3 of each service provider equipped on the communication network N. In this case, the home information communication terminal unit 1 can carry out function of fire wall of an indoor communication network N1 of each dwelling house.

The home information communication terminal unit 1 is connected to the indoor communication network N1 laid in each dwelling house. When a service application program prepared in advance is downloaded (installed) via the communication network N, desired service can be additionally received other than basic service.

The service provider's communication server 2 is equipped at a service provider's side and distributes service application programs to render many kinds of service by communication to each contracted dwelling house. After distributing service application programs, the service provider's communication server 2 communicates required data to render specific customer service between the contracted dwelling house over the communication network N.

On receiving access request to the home information communication terminal unit 1 of the contracted dwelling house from the service provider's communication server 2, the supervisory server 3 allows to access and communicate to the home information communication terminal unit 1 of the contracted dwelling house from the service provider's communication server 2. Namely, the supervisory server 3 has a permission right for access to the home information communication terminal unit 1 equipped in the contracted dwelling house from the service provider's communication server 2.

Further the supervisory server 3 monitors whether service business from the service provider's communication server 2 to the home information communication terminal unit 1 of the contracted dwelling house can be executed normally by means of communication between the home information communication terminal unit 1 provided in each dwelling house and the service provider's communication server 2.

History of periodical communication to the service provider's communication server 2 is stored at the home information communication terminal unit 1 side. The stored data is periodically transmitted to the supervisory server 3 and is checked to monitor any abnormal operation. Otherwise, the supervisory server 3 may be designed to periodically inquire the home information communication terminal unit 1.

On the other hand, the home information communication terminal unit 1 has a function of automatically informing abnormality to the supervisory server 3 by periodically confirming the movement of the living facilities 11 connected to the indoor communication network N1 laid in each dwelling house in addition to the basic function as a normal home information panel.

According to such constructed terminal unit 1, the home information communication terminal unit 1 periodically confirms the movement of the living facility 11 connected to the indoor communication network N1 of each dwelling house and automatically informs to the supervisory server 3 upon finding out abnormality, so that personnel can be dispatched soon from the supervisory server side.

According to this system, an interface of the home information communication terminal unit 1 is opened so as to supply a transmission and management software of the home information communication terminal unit 1 to a service provider. If the supervisory server 3 collects a part of authorization fee and access fee for each contracted dwelling house, a service provider can supply only application programs corresponding to the customer service to be rendered without considering communication procedure between the home information communication terminal unit 1 and the living facilities 11 in the house. Further, as equipment investment for hardware isn't required, new entry of an individual or a small-scale service provider who don't have enough equipment can be encouraged.

System operation of 24 hours is guaranteed for the service rendered by a service provider and service which is required to prevent uncontrolled trouble and is coherent to living can be applied. In the present invention, if a user can't do system maintenance by himself, remote maintenance from the supervisory server 3 can be possible.

For example in a security and guard service, a sensor for detecting window's open and close operation or a glass destruction detection sensor is provided in the house as a security sensor. When the security sensor is operated on warning mode at night or while nobody is in the house, automatic message is sent to the communication server 2 of the security service company via the communication network N from the home information communication terminal unit 1. Then the communication server 2 has an access to the home information communication terminal unit 1 to collect information whether nobody is in the house or the sensor is operated. Based on the information, a security guard is dispatched to confirm the condition of the place or notification is made to the police. In the same manner, fire watch, gas leak watch, water leak watch, and so on can be executed.

In nursing care monitor service, an emergency call service is provided in an elder person's house living alone. If the emergency call button is operated when he feels bad, automatic calling is executed from the home information communication terminal unit 1 to the communication server 2 of the nursing care service company through the communication network N. Then the communication server 2 has an access to the home information communication terminal unit 1 so as to collect information of the person in the house (age, chronic illness, and so on). Then a nursing care staff is informed to go to the house based on such information.

In the same manner in a health care service, an electrocardiogram measuring sensor is mounted on a care receiver and measured data is periodically sent to the communication server 2. The data is stored in the communication server 2 for future diagnosing. When abnormality is detected, it is informed to a doctor or a registered nurse and they are dispatched if necessary. Further, when functional trouble of care equipment (bathing assisting equipment, home lift and so on) is detected, a maintenance person is dispatched earlier. Such a system is particularly available for a house in which an elder person takes care of an elder person.

In an automatic tele-metering service, a communication server 2 of electric power supplier, gas supplier, water supplier, education supplier, or entertainment supplier has an access to the home information communication terminal unit 1 of the contracted dwelling house on a meter reading day. The home information communication terminal unit 1 obtains the used amount data from the meter and returns the data to the communication server 2. Or the home information communication terminal unit 1 is designed to periodically transmit the used amount data.

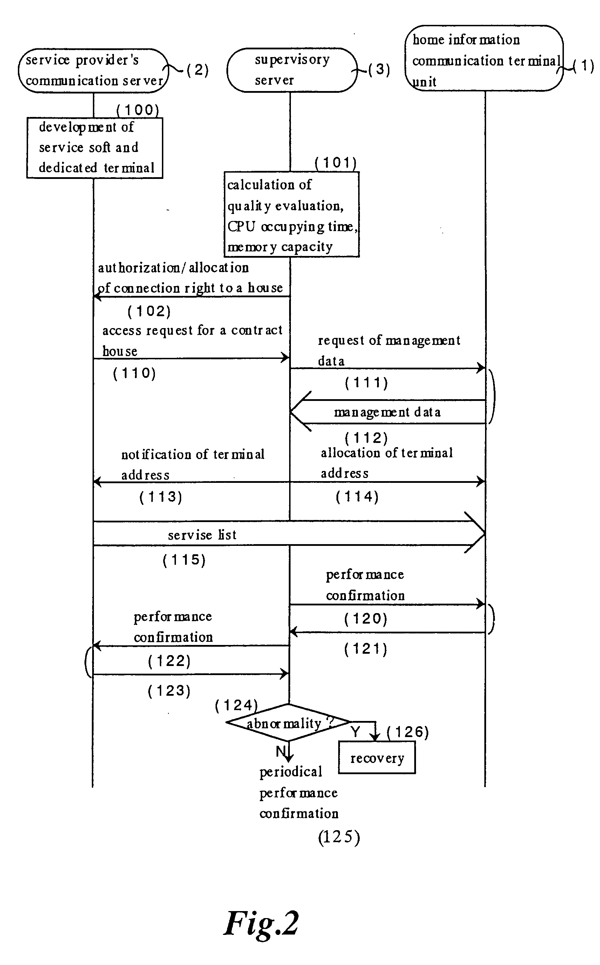

Next operations till service is rendered by a service provider in a customer service supporting system are explained referring to Fig.2. Communication procedures between the home information communication terminal unit 1 of each dwelling house and the living facilities 11 are defined in advance. And communication procedures between the home information communication terminal unit 1 of each house and the communication server 2 of each service provider are also established in advance. Further, constructional procedure and routine of software are established in advance.

The service provider develops a service software (service application program) and required dedicated terminal following the above-mentioned routine as a preliminary step (100). At the supervisory server 3 side, quality evaluation is done and occupied time of CPU and memory capacity are examined for the developed service software and the terminal (101). As the result, if the service provider is authorized, access right to the house is given (102).

Thereafter, when the supervisory server 3 receives the access request to the house binding service contracted from the communication server 2 (110), it obtains management data such as wiring condition and service condition from a data base 10 of the home information communication terminal unit 1 (111, 112) and examine the necessity of additional hardware for a new additional service. The supervisory server 3 gives a terminal address for the service to the house so as to prevent duplication (114) and informs the address to the communication server 2. Then the service software is downloaded to the home information communication terminal unit 1 of the house from the service provider's communication server 2 (115). In this time in the home information communication terminal unit 1, software management information is added and service execution and management of the new software (service communication procedure, CPU execution and management information, and so on) are started.

Then the supervisory server 3 periodically confirms normal operation of the home information communication terminal unit 1 (120, 121) and also confirms system operation of the communication server 2 (122, 123). The home information communication terminal unit 1 monitors executing condition of the service and the software and condition of the hardware based on the management data by self.

When abnormality is occurred in the home information communication terminal unit 1 or the service provider's communication server 2, the supervisory server 3 executes recovery, and in case of normal operation, it continues periodical monitoring (124 - 126). When abnormality occurred in the house, it is informed to the house and the communication server 2 of relating service providers based on the database 10 of the home information communication terminal unit 1 and a responsible person is dispatched.

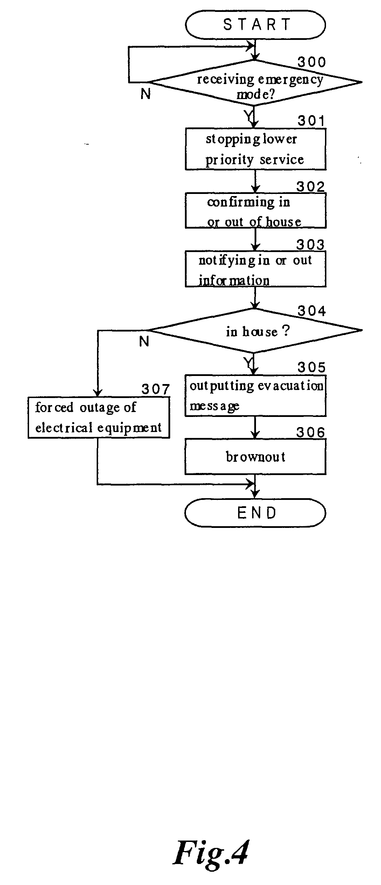

Next, function of the home information communication terminal unit 1 equipped in each dwelling house is explained.
1) Function of connecting the supervisory server 3 and the communication server 2 of each service provider via the communication network N,
2) Function of controlling starting and stopping of execution by downloading service software (service application program) from each communication server 2,
   In which CPU processing time and memory allocation required for each service is controlled for each one of plural service software and each service software is executed and managed so as to realize plural services.
3) Function of monitoring execution of software
   More concretely explained, software is constructed with basic software (OS) and plural service software. The OS has a program download function of the service software and program control and monitor function so as to execute, stop, control, and restart the service software. Each service software is developed based on the management procedure to manage the condition. OS monitors the operation of the software by managing its procedure.
   There are following various methods as such monitoring methods .
   For example, service software returns operation confirmation to OS within relatively short time (e.g. 10 m/second) and when reply isn't sent within the time, OS judges it abnormal and proceeds to recovery. Further, the service software writes its condition change in a memory and OS monitors its change.
   Moreover, the program execution area of each service software (range of address of memory area) is defined. When access exceeding the execution area by runaway of CPU caused by noise is done, execution of the program is stopped because of abnormality. The OS sends program-to-program message of inquiry command to each service software and controls condition by detecting a response fixed in advance.
   When abnormality of program is thus detected, automatic recovery (restart) is executed, abnormality is informed to the communication server 2 of the service provider relating to the program having abnormality, or it is informed to the supervisory server 3.
4)Function of confirming operation of the home information communication terminal unit 1 itself
   The OS periodically conducts correspondence with the supervisory server 3 following fixed communication procedure and it makes the supervisory server 3 monitor the house according to the time interval of the communication time and the data content of the communication. The supervisory server 3 manages the last communication time from the home information communication terminal unit 1. When periodical correspondence is interrupted, an operator is informed and a personnel is dispatched to repair the communication terminal unit 1. When there is abnormality in correspondence data or communication procedure, the same procedure mentioned above is executed.
5) Function of monitoring conditions of hardware (living equipment 11)
   The number, address, kinds, and wire system of the connected terminals are stored in advance. Commands defined in advance are periodically transmitted to each terminal, and when correct response is returned within a fixed time, it is judged as normal. When correct response isn't returned, abnormality is informed to the supervisory server 3 as abnormalities of terminals and communication pathway.
6) Function of management of communication to the communication server 2 of each service provider
   Access of the communication server 2 and the supervisory server 3 corresponding to the downloaded service software is made possible. For example, the addresses of the communication server 2 and the supervisory server 3 are stored and access other than the stored address is denied. Or access permission is judged based on a password for each home information communication terminal unit 1 given by the supervisory server 3 in advance.
   Further, communication record with each service provider's communication server 2 is stored. The supervisory server 3 judges whether each service is executed normally by analyzing the communication record. For example, when request message from the house is sent but effective response message isn't returned from the service provider, the service provider is examined.
7) Function of providing required common information between each service
   The OS provides information commonly required for each service to each service software. For example such information includes time information obtained from the hardware, person's in or out of house information obtained from switch set up or human body detection sensor, weather information distributed from the supervisory server 3, and sleep or active information judged from detection of human body detection sensor.
8) Function of supporting software development of each service provider
   The OS prepares basic function such as communication function as OS function. Thereby it is enough for the service provider to develop only the function about the service as service software. As the home information communication terminal unit 1 has execution environment of each service software, the load on each service software is lightened.
9) Function of switching into emergency mode (mentioned later referring to Fig.4)
   When disaster such as earthquake or fire is occurred, the home information communication terminal unit 1 is set in an emergency mode so as to stop supply of gas and electricity considering a person's in or out of house information. Namely, when receiving an emergency direction from supervisory server the above, the supervisory server 3 interrupts normal mode and sets all the home information communication terminal units 1 provided in a specific area to execute emergency mode for necessary operations and it operates in accordance with required remote control from the supervisory server 3.

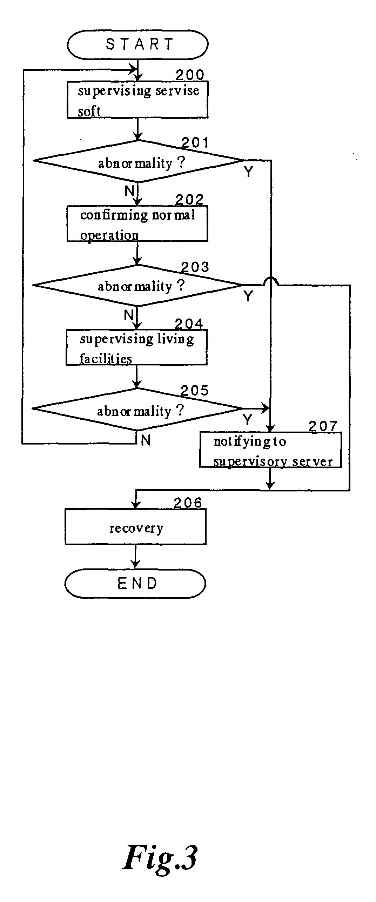

Fig.3 is a flow chart (200 - 207) showing basic operations of the home information communication terminal unit 1. The home information communication terminal unit 1 monitors each service software (200), confirms normal operation by correspondence with the supervisory server 3 (202), and monitors the connected living equipment (204) periodically. When abnormality is occurred and the supervisory server 3 can't detect it, the unit 1 informs abnormality to the supervisory server 3 (207) and proceeds to recovery (206).

Fig.4 is a flow chart showing operations of the home information communication terminal unit 1 on emergency mode (300 - 307). When the dwelling house contracting the customer service support system of the present invention is introduced in the whole community and extensive disaster such as earthquake and flood is occurred, the supervisory server 3 transmits emergency mode signals to the house in the community.

When the home information communication terminal unit 1 receives the emergency mode command (300), low priority service defined in advance is stopped (301). In this case CPU process time and memory amount required for realizing emergency mode are found in advance and service may be sequentially stopped from the one having lower priority.

Accordingly as the supervisory server 3 sets the home information communication terminal unit 1 provided in a specific area to emergency mode in case of emergency and operates required remote control, escape guiding and prevention of damage expansion in case of disaster can be effectively done.

Then person's in or out of house information is confirmed (302). For example, existence of person is judged from operation of the electric meter, gas meter and water and in or out information is reported to the supervisory server (303). When a person is in the house, voice message is sent from the supervisory server 3 and evacuation message is output (304, 305). This message includes notice of evacuation area, evacuation instructions, notice of disaster condition, and distribution notice of water. When a person is in the house, unnecessary electricity is saved (306). On the other hand no one is in the house, each electric equipment (living facilities 11) are forcibly stopped (307) so as to prevent fire disaster.

Next, function of the supervisory server 3 is explained.
1) Function of monitoring each service provider's communication server 2
   The supervisory server 3 periodically conducts correspondence with each communication server 2 and confirms existence of reply of determined communication procedure in advance. And it also confirms that normal reply (service rendering) for a service request is executed referring to the communication record of each home information communication terminal unit 1 at a fixed time interval. In case of abnormality, it urges the corresponding communication server 2 to recover or it acts for the function of the communication server 2. Supervisory server 3 stores service software in advance in order to act for the communication server 2.
2) Function of operation confirmation of each home information communication terminal unit 1
   The supervisory server 3 stores system construction, connected terminal, and executed service of every connected communication terminal unit 1 in advance. It periodically conducts correspondence in a communication procedure determined for the communication terminal unit 1 in advance. When correct reply is returned within a fixed time, it is judged normal. When it is judged abnormal, a serviceman is dispatched for recovery. The supervisory server 3 confirms any disagreement comparing connection information and service information stored in the communication terminal unit 1 and the information stored in the supervisory server 3. Further based on autonomous self check result of the home information communication terminal unit 1, notice of hardware trouble or terminal trouble is received from the communication terminal unit 1 and a personnel is dispatched for recovery.
3) Function of data backup of each home information communication terminal unit 1
   When trouble is occurred in the home information communication terminal unit 1 and hardware is replaced, health control service and nursing care monitor service are affected if the measured data such as pulsation is deleted. On this account the home information communication terminal unit 1 is provided with a temporary memory storing data relating to service business and environment set information of the home information communication terminal unit 1. The data stored in the temporary memory is sent to the supervisory server 3 at a fixed time interval for backup of data. Accordingly, service in which pulsation data for a month is recorded, change of physical condition is informed, and a doctor is dispatched can be constantly rendered and quickly recovered in the nursing care monitor service.
4)Verification function in case of adding new service
   Whether a new service can be accommodated and its quality can be secured is judged by calculating the total amount of CPU occupation time, memory capacity, and access frequency for each terminal or for each service based on the number of terminals, wiring condition, service information connected with each home information communication terminal unit 1. As a result, addition of a new service is permitted and quality per home information communication terminal unit 1 is guaranteed.
5) Function of download execution of service software
   When service software of a service provider is authorized, the supervisory server 3 allows the home information communication terminal unit 1 for rendering service to download the service software from the communication server 2. The supervisory server 3 has a function to allow the home information communication terminal unit 1 provided in the dwelling house contracted by a service provider to download the service application program in place of the service provider. Accordingly, if the service provider can't prepare the service application program, the server 3 can act for the service provider.
6) Function to act for service provider
   The supervisory server 3 can act for center function other than the above-mentioned supply of service software. If the service provider doesn't have center computer facility (communication server 2), the supervisory server 3 informs only dispatch request in case of abnormality to the communication terminal of the service provider in place of center function (monitor and management function) of the service provider.

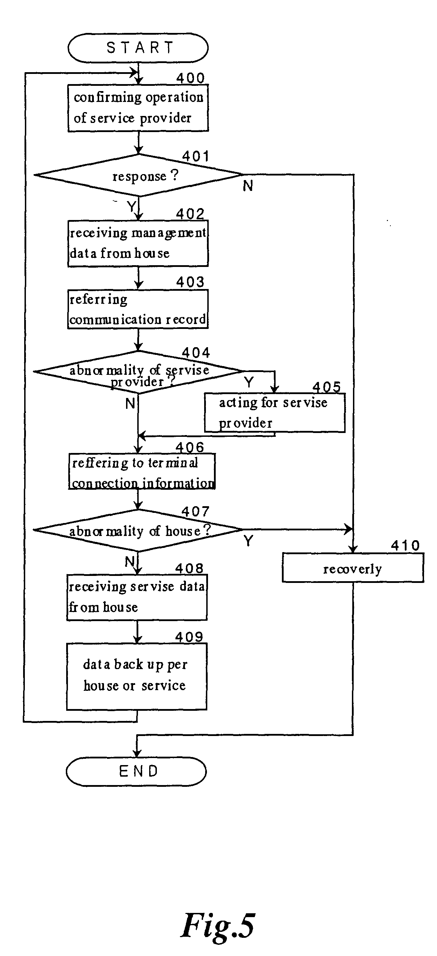

Fig.5 is a flow chart (400 - 410) showing basic operations of the supervisory server 3. The supervisory server 3 periodically monitors each service provider's communication server 2 and the home information communication terminal unit 1 in each dwelling house.

If there is a replay in case of operation confirmation of the service provider, management data is received from the house (400 - 402). If the service provider is judged to be abnormal referring to the communication record, the supervisory server 3 renders service on behalf of the provider (403 - 405). Then if the house is judged to be normal referring to the terminal connection information, service data is received and has back-ups of data in a memory 30 for each house or for each service (407 - 409). In case of abnormality of the service provider or the dwelling house, recovery procedure is executed in such a manner that the service provider is informed or a service man is dispatched (410).

Next, accounting method on the supervisory server 3 in the customer service supporting system of the present invention is explained. Accounting item for each service provider includes authorization charge for a connection provider including preliminary survey charge for guaranteeing the service rendered by the service provider, frame work of the service software (for incorporating the structure for software quality control), charge for disclosing technology and instruction charge such as instruction for defining software to be operated as the home information communication terminal unit 1 like connection to the OS, administration charge of the service software, charge of using hardware source such as the home information communication terminal unit 1, charge for handling software trouble, and surrogate charge of center function of the service provider.

As an accounting method of these accounting items, CPU occupation time ratio, size of the memory occupation area, and a fixed rate for service charge for user can be considered.

As an accounting method for a user in each dwelling house, there is a fixed charge per a service contract and accounting per the number of execution times of the service. Or various points may be given for each service and loading on the facility may be increased or decreased.

In case of accounting on the number of the service execution time, the supervisory server 3 charges service fee when the contracted dwelling house receives service of the service provider via the home information communication terminal unit 1. That is, the amount of money comparable to the used amount is collected by the supervisory server 3 as the charge for the service received by the house. Plural services are downloaded in advance and the service charge is collected when a user used the service.

There is a case of service between plural contract dwelling houses, not between the house and the service provider. For example, in the service in which acquaintance's house such as relative is usually informed in case of abnormality, accounting is executed only when the place to be informed is changed to the service provider in case of a person in the house to be informed goes out. In such a system, as the supervisory server collects service charge when each contracted dwelling house receives service from the service provider via the home information communication terminal unit, charges can be appropriately collected per each contracted dwelling house.

As is apparent from the above-mentioned, according to the present invention, a home information communication terminal unit connected to indoor communication network is equipped in each contracted dwelling house, communication of a service provider's communication server and the home information communication terminal unit of the contracted dwelling house is monitored over the communication network which is constructed by connecting the service provider's communication server and the supervisory server, and whether service business is executed normally or not is monitored. Accordingly, service maintenance of service business can be operated 24 hours and service required for finding occurrence of abnormality can be applied.

In case of carrying out such method, it may be recommendable to openly disclose technology information on interface of the home information communication terminal unit for general use.

Further, if the supervisory servers offer such software program to realize access and communication with or management of the home information communication terminal unit to service providers such service providers have only offer customized service itself or supply such application programs for offering customized service, without considering complicated communication procedures between the home information communication terminal unit and various living facilities and one the other hand the supervisory server in return for that can collect a part of the authorization charge and access charge for contracted dwelling house from such service providers.

Accordingly, if the above way is done for the sake of utilizing the system, it may be possible for such individual person or small suppliers as don't have enough hardware facilities or equipment to join network business for rendering customized service as service providers because such hardware facilities or equipment for rendering service is not required.

## Claims

1. Amethod for supervising and supporting customer service offered to a contracted dwelling house over a communication network by a service provider, by a supervisory server equipped on a communication net work, using the communication network,
said method comprising the steps of;
at said supervisory server,
receiving access request from a communication server of said service provider for a home information communication terminal unit equipped in said contracted dwelling house,
judging said access request from said communication server of said service provider to allow said communication server to access to said home information communication terminal unit when identifying its authentication, but to reject access to said home information communication terminal unit when not identifying its authentication, said contracted dwelling house being offered desired customer service through said home information communication terminal unit by executing service application program which is provided in advance by said service provider and is installed into said home information communication terminal unit connected to an indoor network laid in said contracted dwelling house, and
after allowing for access of said communication server of said service provider to said home information communication terminal unit, watching communication associated with said communication server unit and said home information communication terminal unit, to judge whether or not said customer service is normally offered to said contracted dwelling house.

2. The method of claim 1, wherein said home information communication terminal unit equipped in said each contracted dwelling house is offered a specific customer service from said service provider, by logging in said communication server of said service provider or a specific communication service server equipped on said communication network to download into said terminal unit and execute an application program stored in either one of said servers.

3. A system for supervising and supporting customer service offered to a contracted dwelling house over a communication network by service provider, by a supervisory server equipped on the communication network , using a communication network, said system comprising ;
a home information communication terminal unit connected to an indoor communication network laid in said each contracted dwelling house, for receiving desired service from said service provider by executing a service application program prepared in advance,
a service communication server equipped on said service provider side, for providing various customer services to said contracted dwelling house over said communication network, and
a supervisory server for judging allowance for access of said service communication server to said home information communication terminal unit when receiving access request from said service communication server, to allow said communication server to access to said home information communication terminal unit when identifying its authentication but to reject it when not identifying its authentication, said supervisory server watching communication associated with at least one of said communication server of said service provider and said home information communication terminal unit of said contracted dwelling house, thereby judging whether or not said customer service through said home information communication terminal unit is normally offered to said contracted dwelling house of which home information communication terminal unit is accessed by said communication server of said service provider .

4. The system of claim 3, wherein said home information communication terminal unit periodically monitors the operation and/or the movement of a living facility connected to said indoor network laid in said contracted dwelling house and automatically reports to said supervisory server in case of abnormality.

5. The system of claim 3, wherein said home information communication terminal unit has a temporary memory in which related data on customer service provided by said service provider and information data for setting the environment of said home information communication terminal unit are stored, and wherein said home information communication terminal unit sends out data stored in said temporary memory as backup data to said supervisory server every predetermined period.

6. The system of claim 3, wherein said supervisory server aggregates and records service charges for said each contracted dwelling house, when said contracted dwelling house receives customer service from said service provider through said home information communication terminal unit.

7. The system of claim 3, wherein said home information communication terminal unit executes a normal mode to watch the operation and /or the movement of a living facility connected to said indoor network laid in each contracted dwelling house and interrupts said normal mode to execute an emergency mode for executing necessary emergency operation when receiving an emergency direction from said supervisory server, while said supervisory server sets said home information communication terminal unit equipped in all the dwelling houses in a specific area in said emergency mode to perform necessary remote control.

8. The system of one of claim 3 to 7, wherein said home information communication terminal unit equipped in said each contracted dwelling house is offered a customer service from said service provider, by logging in said communication server of said service provider or a specific communication service server equipped on said communication network to download into said terminal unit and execute an application program stored in either one of said servers.

9. The system of one of claim 3 to 7, wherein said supervisory server allows said home information communication terminal unit to download said service application program on behalf of said service provider in order for contracted dwelling house to receive customer service from said service provider.
